# EUROPEAN PATENT APPLICATION

(11) **EP 1 788 278 A2**
(43) Date of publication of application: **23.05.2007**
(21) Application number: 06124253.3
(22) Date of filing: 16.11.2006
(51) Int. Cl.: F16F 15/14

(54) **Apparatus and method for reducing vibration in a shaft**

(30) Priority: 17.11.2005 JP 2005332921
(71) Applicant: Nissan Motor Company Limited, Kanagawa-ku Yokohama-shi, Kanagawa 221-0023 (JP)
(72) Inventor: Sakamaki, Hideaki, Yokohama-shi, Kanagawa 221-0023 (JP)
(74) Representative: Holmes, Matthew William

(57) **Abstract**

A vibration transfer rate reducing device and method are provided that can reduce the vibration transfer rate of a shaft to improve the noise and vibration performance in a vehicle. The vibration transfer rate reducing device includes a shaft that transfers rotation driving force, joints connected to the end parts of the shaft, a weight arranged at the end portion of the shaft on the side of transmission and extended to the side of transmission, and a weight arranged at the end portion of the shaft on the side of the differential and extended to the side of the differential.

## Description

The present invention relates to vibration transfer and particularly, but not exclusively, to a vibration transfer method and apparatus which can restrain noise in automobiles caused by flexural vibration of the shaft (such as a propeller shaft) that transfers rotation driving force used for the automobile.

In general, the power of an engine is transferred to a propeller shaft via a transmission. The transferred power is then transferred to the left and right driving wheels via a differential. Flexural vibration often occurs in the propeller shaft due to the vibration from the engine or road surface and the eccentricity of the propeller shaft itself. As a result, the noise in the vehicle is increased and the noise and vibration performance is deteriorated.

In Japanese Kokai Patent Publication No. 2003-247596 there is described means for attenuating the flexural vibration of the propeller shaft that causes reduction of the noise and vibration performance in the vehicle by arranging a dynamic damper in the propeller shaft.

It is an aim of the invention to improve upon known technology. Other aims and advantages of the invention will become apparent from the following description, claims and drawings.

Aspects of the invention therefore provide an apparatus, a method and a vehicle as claimed in the appended claims.

According to another aspect of the invention there is provided a vibration transfer rate reducing device comprising a shaft for transferring a rotation driving force, a rotary member connected to an end portion of the shaft via a joint, the rotating member rotatable with the shaft and a weight arranged at the end portion of the shaft and extending axially in a direction of the rotary member.

In an embodiment, the weight has a cylindrical configuration and two end surfaces. One of the end surfaces of the weight may be fixed to an end surface of the end portion.

In an embodiment, the weight has a large outer diameter portion whose outer diameter is larger than the one of the end surfaces of the weight. In an embodiment, the large outer diameter portion has an outer diameter tapered from a side of the shaft toward the other of the end surfaces of the weight.

In an embodiment, the weight has a cylindrical shape and two end portions such that an outer diameter of the weight changes from one end portion of the weight to the other end portion of the weight. One end portion of the weight may be fixed at the end portion of the shaft. The other end portion of the weight may extend from the end portion of the shaft.

In an embodiment, the outer diameter of the one end portion of the weight is smaller than the outer diameter of the other end portion of the weight.

In an embodiment, the weight has a middle portion between the two end portions and the outer diameter of the middle portion is smaller than the outer diameter of the one end portion of the weight.

The device may comprise a through-hole located in the joint, a first bolt fixing the one end portion of the weight to the end portion of the shaft through the through-hole wherein the joint is fixed between the one end portion of the weight and the end portion of the shaft and a second bolt fixing the rotary member to the joint.

In an embodiment, the rotary member is the output shaft of a transmission. The weight may be closer to the transmission than to the joint. In an embodiment, the rotary member is a input shaft of a differential. The weight may be closer to the differential than to the joint.

In an embodiment, the joint comprises an inner ring, an outer ring that encloses the inner ring and a ball between the inner ring and the outer ring. The end portion of the shaft may be coupled to the inner ring.

The device may comprise a flange connecting the outer ring of the joint to the rotary member; and wherein the weight is located in an area between the flange and the joint.

The device may comprise a grease case in an area between the outer ring and the shaft. In an embodiment, the joint has a grease sealed by the grease case and the flange.

The device may comprise a second rotary member connected to an opposed end portion of the shaft via a second joint, the second rotating member rotatable with the shaft and a second weight arranged at the opposed end portion adjacent the second joint and extending axially in a direction of the second rotary member.

According to another aspect of the invention there is provided a vibration transfer rate reducing device for a vehicle, comprising means for transferring driving force to a rotary member, means for connecting an end portion of the transferring means to the rotary member and weight means for reducing a vibration transfer rate of the transferring means, the weight means arranged at an end part of the transferring means and extending to the rotary member.

In an embodiment, the connecting means comprises a first joint between a first end portion of the transferring means and the output shaft and a second joint between a second, opposed end portion of the transferring means and the input shaft. The weight means may comprise a first weight arranged at the first end portion and extending to the output shaft and a second weight arranged at the second, opposed end portion and extending to the input shaft.

According to a further aspect of the invention there is provided a vibration transfer reducing method for a driving force transfer member that transfers driving force, the method comprising connecting a rotary member to an end portion of the driving force transfer member using a connecting member wherein the rotary member is rotatable with the driving force transfer member and arranging a weight at the end portion of the driving force transfer member, the weight extending from the connecting member in a direction of the rotary member.

The method may comprise connecting a second rotary member to an opposed end portion of the driving force transfer member using a second connecting member wherein the second rotary member is rotatable with the driving force transfer member; and arranging a second weight at the opposed end portion of the driving force transfer member, the second weight extending from the second connecting member in a direction of the second rotary member.

In an embodiment, the connecting member is a joint having an inner ring and an outer ring and a ball enclosed therebetween. Connecting a rotary member to an end portion of the driving force transfer member may comprise connecting the rotary member to the outer ring of the joint, the end portion of the driving force member connected to the inner ring of the joint and arranging a weight at the end portion of the driving force member.

Embodiments of the invention provide a device that may reduce the vibration transfer rate on a shaft that transfers the rotation driving force of the propeller shaft to improve the noise and vibration performance in the vehicle.

For example, in an embodiment a device comprises a shaft for transferring a rotation driving force, a rotary member connected to an end portion of the shaft via a joint, the rotating member rotatable with the shaft and a weight arranged at the end portion and extending axially in a direction of the rotary member.

In another embodiment, a device comprises means for transferring driving force to a rotary member, means for connecting an end portion of the transferring means to the rotary member and weight means for reducing a vibration transfer rate of the transferring means, the weight means being arranged at an end part of the transferring means and extending to the rotary member.

A vibration transfer reducing method for a driving force transfer member that transfers driving force comprises connecting a rotary member to an end portion of the driving force transfer member using a connecting member wherein the rotary member is rotatable with the driving force transfer member and arranging a weight at the end portion of the driving force transfer member, the weight extending from the connecting member in a direction of the rotary member.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:
Figure 1 is a schematic view illustrating an example of a vibration transfer rate reducing device embodying the invention;
Figure 2 is a partial cross-sectional view including the central axial line and illustrating the details of the parts of vibration transfer rate reducing device shown in Figure 1;
Figures 3A and 3B are simplified schematic views illustrating other configurations of the part of vibration transfer rate reducing device;
Figures 4A and 4B are cross-sectional and perspective views, respectively, illustrating yet another example of the parts of vibration transfer rate reducing device;
Figures 5A and 5B are cross-sectional and perspective views, respectively, illustrating yet another example of the parts of vibration transfer rate reducing device;
Figures 6A and 6B are cross-sectional and perspective views, respectively, illustrating yet another example of the parts of vibration transfer rate reducing device;
Figure 7 is a graph illustrating the effect of the vibration transfer rate reducing device disclosed in Figure 2; and
Figure 8 is a graph illustrating the effect of the vibration transfer rate reducing device disclosed in Figures 6A and 6B.

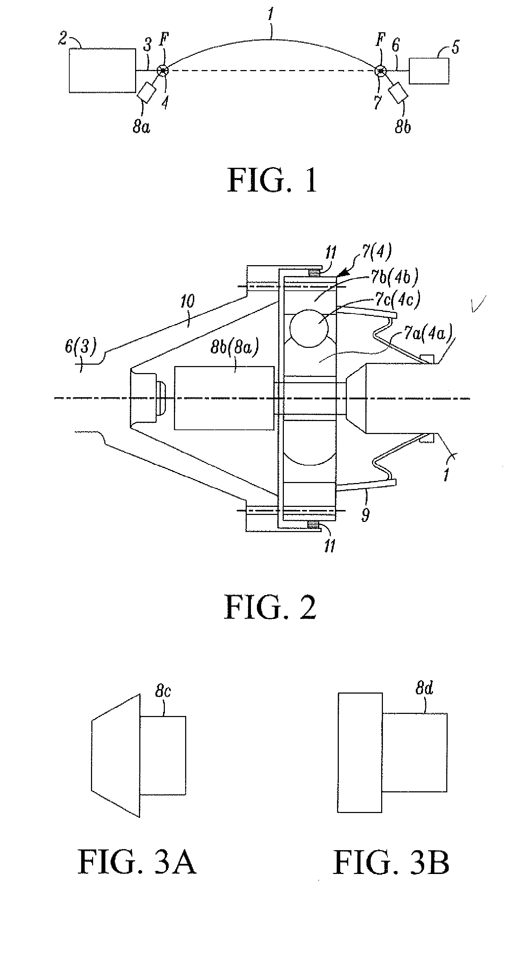

Referring firstly to Figure 1, this is a schematic view illustrating an example of the vibration transfer rate reducing device disclosed in the present invention. In the vibration transfer rate reducing device disclosed herein, one end of propeller shaft 1 is connected to the output shaft 3 (i.e., a rotary member) of a transmission 2 via constant velocity joint(s) 4, which are used as universal joints. Also, the other end of propeller shaft 1 is connected to the input shaft 6 (i.e., a rotary member) of a differential 5 via constant velocity joint(s) 7. Weight 8a extends from the constant velocity joint 4 to the side of transmission 2 and is arranged at one end of the propeller shaft 1, while weight 8b extends from the constant velocity joint 7 to the side of the differential 5 and is arranged at the other end of the propeller shaft.

The transmission 2 is installed in the vehicle body (not shown). Since driving wheels (not shown) are installed on the vehicle body via a suspension (not shown), the driving wheels have displacements in various directions corresponding to the input from the road surface or the change in the load amount of the vehicle body corresponding to the vehicle body. Consequently, when connecting the output shaft 3 of the transmission 2 with the propeller shaft 1 and connecting propeller shaft 1 with the input shaft 6 of the differential 5, constant velocity joints 4, 7 as universal joints are used in order to absorb the displacements and the angle changes in the axial direction.

According to this example, when flexural vibration is applied to the propeller shaft 1, the node F of the flexural vibration positioned at the two ends along the axial direction can be moved from the center of propeller shaft 1 in the axial direction to the side of the constant velocity joints 4, 7. In this way, the vibration and amplitude of constant velocity joints 4, 7 can be reduced. The vibration and amplitude at the tip of the output shaft 3 of the transmission 2 and the vibration and amplitude at the tip of the input shaft 6 of differential 5 can be reduced. In this way, the vibration of the panel of the vehicle body caused by the vibration of the transmission 2 and the differential 5, especially the vibration in the vertical direction, can be restrained. Deterioration of the noise and vibration performance in the vehicle can also be alleviated.

Figure 2 is a cross-sectional view including the central axial line and illustrating the details of the parts of vibration transfer rate reducing device shown in Figure 1.

Since constant velocity joints 4, 7 are similarly constructed in this case, only one figure is needed to illustrate both. Constant velocity joint 7 (4) comprises an inner ring 7a (4a) connected to the propeller shaft 1, an outer ring 7b (4b) that encloses the inner ring 7a (4a), and a ball 7c (4c) arranged between the inner ring 7a (4a) and the outer ring 7b (4b). Weight 8b (8a) formed in a cylindrical shape is added to extend to the side of the differential 5 (or the transmission 2) in the axial direction of the propeller shaft 1 connected to the inner ring 7a (4a) of the constant velocity joint 7(4). Figure 2 shows the configuration on the side of differential 5. (The reference numbers in parenthesis refer to the components on the side of the transmission 2.) As shown in Figure 2, weight 8b (8a) is arranged to extend to the side of the differential 5 (transmission 2) on the end surface in the axial direction at the tip of the propeller shaft 1 pressed into the through hole (i.e., an opening part) formed on the inner ring 7a (4a) of the constant velocity joint 7(4). In this way, weight 8b (8a) is arranged closer to the side of differential 5 (transmission 2) than is the constant velocity joint 7(4).

For the constant velocity joints of Birfield type, double offset type, fixed tripod type and level type, weight 8a, 8b can be added easily at the two ends of the propeller shaft 1 in the axial direction. Weight 8a is arranged to extend to the side of the transmission 2, and weight 8b is arranged to extend to the side of the differential 5. Therefore, the node F of the flexural vibration at the two end portions of propeller shaft 1 can be moved to the sides of constant velocity joints 4, 7, and the vibration and amplitude of constant velocity joints 4, 7 can be reduced. Hence, the vibration and amplitude at the tips of the differential 5 and the transmission 2 can be reduced. Consequently, the vibration of the panel of the vehicle body caused by the vibration of the transmission 2 and the differential 5, and especially the vibration in the vertical direction, can be restrained. Deterioration of the noise and vibration performance in the vehicle can also be alleviated.

Further, when performing grease sealing to the constant velocity joints 4, 7, the flange 10 connected to the input shaft 6 of the differential 5 (output shaft 3 of transmission 2) is used as the grease case.

In this case, one end of each flange 10 is respectively embedded in the output shaft 3 of transmission 2 and the input shaft 6 of differential 5. An opening for installing the constant velocity joint 7 (4) is formed at the other end of each flange 10. The flange 10 is formed in a hollow conical shape with diameter gradually increasing from one end (i.e., the shaft 6 (3) end) to the other end (i.e., the constant velocity joint 7 (4) end). As shown in Figure 2, the constant velocity joint 7 (4) is installed in the opening formed at the tip end of the flange 10. The flange 10 is fixed to the end of the input shaft 6 by a bolt. In this way, the input shaft 6 of the differential 5 (and the output shaft 3 of the transmission 2) is connected to the propeller shaft 1.

As also shown in Figure 2, when performing grease sealing to the constant velocity joint 7 (4), a grease case 9 arranged on the constant velocity joint 7 (4) on the side of the propeller shaft 1 is used as the grease case. For the constant velocity joint 7 (4), no grease case is used on the side of the differential 5 (transmission 2). Also, a rubber seal 11 is arranged between the inner peripheral surface of the opening part of flange 10 and the outer peripheral surface of outer ring 7b (4b) of the constant velocity joint 7 (4) to prevent grease from leaking.

Since the conventional grease case on the side of differential 5 (transmission 2) is not included, space is provided between the two ends in the axial direction of the propeller shaft 1 connected to the inner ring 7a (4a) of the constant velocity joint 7 (4) and the tip of the input shaft 6 (and the tip of the output shaft 3 of transmission 2). Since the two ends of propeller shaft 1 in the axial direction can be arranged in this space, it is easier to add weight 8b (8a).

Figures 3A and 3B illustrate other configurations of the part of vibration transfer rate reducing device. Besides the configuration shown in Figure 2, weight 8b (8a) can also be set inside the flange 10. As shown in Figure 3A, the weight 8c is formed in a cylindrical shape. The weight 8c has a large outer diameter portion and two end surface. A diameter of the large outer diameter portion is larger than a diameter of one end surface that fixed on the end surface of the propeller shaft 1. The large outer diameter portion can also be formed such that the outer diameter reduces or tapers from the side of the propeller shaft 1 toward the other end surface of the weight 8c. That is, it is also possible to use weight 8c with its tip portion having a wedge-shaped cross section. Also, as shown in Figure 3B, the weight is formed in a cylindrical shape, having a large outer diameter portion and two end surface. A diameter of the large outer diameter portion is larger than a diameter of one end surface that fixed on the end surface of the propeller shaft 1. The large outer diameter portion can also be formed such that the outer diameter is the same or constant from the side of the shaft 1 toward the other end surface of the weight 8d. That is, it is also possible to use weight 8d having an increased cross section at the tip portion. In the latter case shown in Figure 3B, the center of gravity is farther from the end of the propeller shaft 1 compared with that of the former shown in Figure 3A. Therefore, if the weight is formed in the same mass the shape of weight 8d is better than the shape of the weights shown in 8a, 8b or 8c in moving the node F of the flexural vibration of the propeller shaft 1 to the side of the constant velocity joints 7, 4.

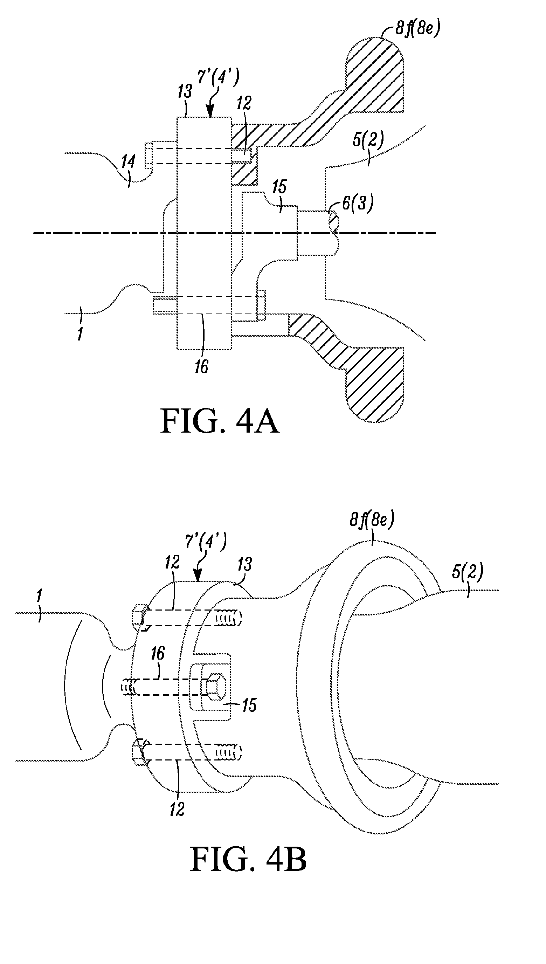

Figures 4A and 4B are views illustrating another embodiment of the parts of vibration transfer rate reducing device disclosed herein. Figure 4A shows a partial cross-sectional view including the central axial line of propeller shaft 1 and the input shaft 6 of the differential 5 (and output shaft 3 of the transmission 2). Figure 4B is an oblique view viewed from the oblique direction on the side of the differential 5 (transmission 2).

In Figures 4A and 4B, instead of the constant velocity joints shown in Figure 1, flexible joints 7' (4') are used. Weight 8f (8e) has a hollow cylindrical shape (i.e., a conical shape) with an increased diameter on the side of the differential 5 (transmission 2). Weight 8f (8e) is added to the flexible joint 7' (4') and is fastened by bolts 12 used as a fastening means to fasten the weight 8f (8e) to the flexible joint 7' (4') and to the propeller shaft 1.

In this way, for the flexible joints 4', 7', weights 8e, 8f can be added easily at the respective ends of propeller shaft 1 in the axial direction. As described above, the joint of the flexural vibration of the propeller shaft 1 can be moved to the side of flexible joints 4', 7'. The vibration and amplitude of flexible joints 4', 7' can be reduced, and the vibration and amplitude at the tip of the transmission 2 and the differential 5 can be reduced. In this way, the vibration of the panel of the vehicle body caused by the vibration of the transmission 2 and the differential 5, especially the vibration in the vertical direction, can be restrained. Deterioration of the noise and vibration performance in the vehicle can also be alleviated.

Flexible joints 4', 7' are constituted with one or more discs 13 made of rubber, etc. Yoke 14 formed at the end portion of propeller shaft 1 contacts with one end surface of the disc 13. A first set of bolts 12 are screwed through apertures in the disc and on the weight 8f (8e) to fasten the weight 8f (8e). At the other end surface of disc 13, the yoke 15 connected to the output shaft 6 of the differential 5 (or output shaft 3 of transmission 2) is fastened by a screwing bolt (or bolts) 16 in a respective nut (not shown). The propeller shaft 1 and the input shaft 6 of the differential 5 (or output shaft 3 of the transmission 2) are connected, and the displacement in the axial direction between the shaft 1 and the input shaft 6 (or between the shaft 1 and the output shaft 3) as well as the angle variation can be absorbed.

As described above, the weight 8f (8e) is fastened by bolts 12 to the end surface of the flexible joint 7' (4') on the side of the differential 5 (transmission 2). In this way, weight 8f (8e) is formed to extend from the flexible joint 7' (4') to the side of the differential 5 (transmission 2). Consequently, compared to the case without the weight 8f (8e), the joint of the flexural vibration of the propeller shaft 1 is present on the side of flexible joint 7' (4'), and the vibration and amplitude of the flexible joint 7' (4') can be reduced. Also, the weight 8f (8e) is thicker at the end portion that extends to the side of the differential 5 (transmission 2) than at the end portion fixed on the propeller shaft 1. In this way, the center of gravity of the weight 8f (8e) is close to the tip side of the weight compared with the case when the weight has uniform thickness. Consequently, if the weight is formed in the same mass, weight 8f (8e) has a better shape than the case when the weight has uniform thickness for moving the node F of the flexural vibration of the propeller shaft to the side of the constant velocity joint.

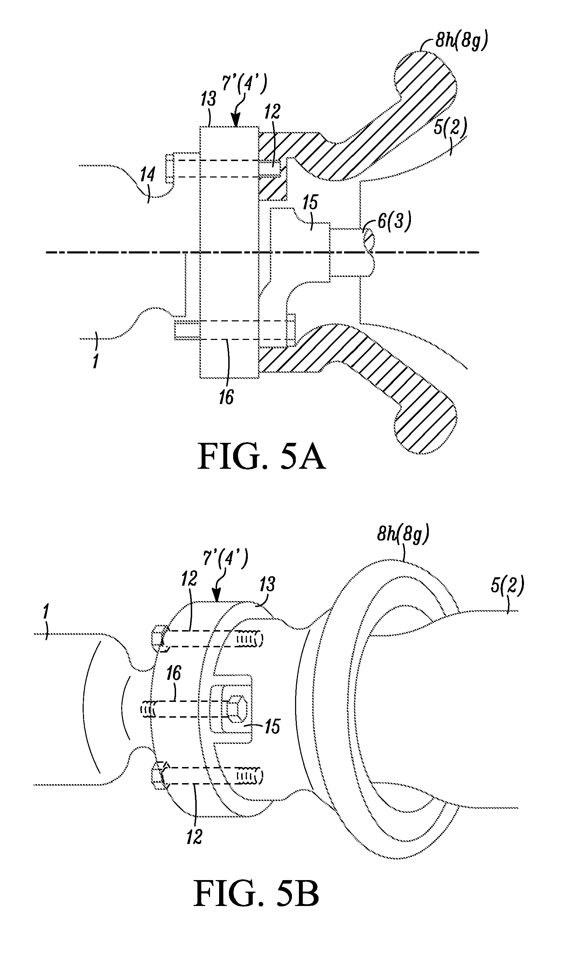

Figures 5A and 5B are views illustrating another example of the parts of vibration transfer rate reducing device. Figure 5A shows a partial cross-sectional view including the central axial line of propeller shaft 1 and the input shaft 6 of the differential 5 (output shaft 3 of the transmission 2). Figure 5B is an oblique view viewed from the oblique direction on the side of the differential 5 (transmission 2).

Compared with the vibration transfer rate reducing device shown in Figures 4A and 4B, the cylindrical shaped weight 8h (8g) is closer to the input shaft 6 of the differential 5 (output shaft 3 of transmission 2) in the radial direction, and the outer diameter of the middle portion of weight 8h (8g) is reduced. In this way, interference with other parts can be avoided without reducing the mass of weight 8h (8g). The rest of the configuration is the same as that shown in Figure 4 and will not be explained further.

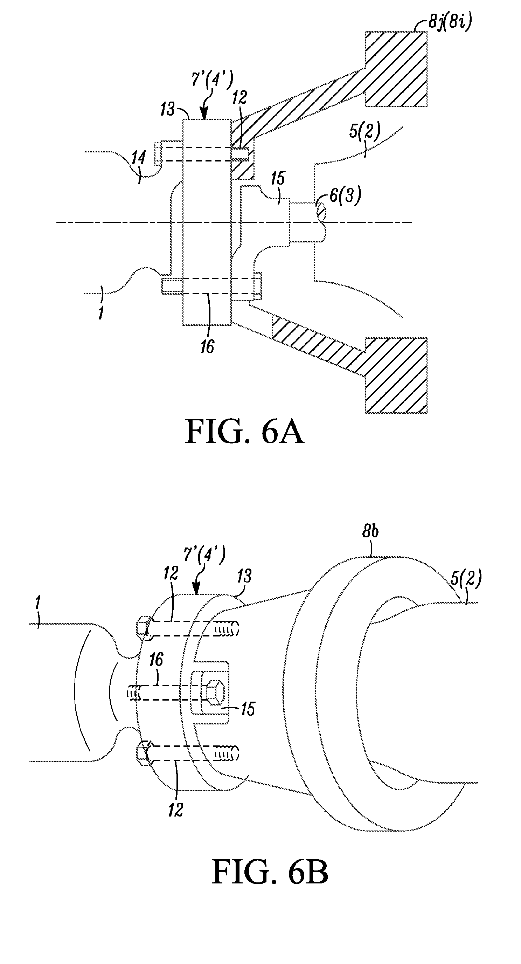

Figures 6A and 6B show another example of the parts of vibration transfer rate reducing device. Figure 6 A shows a partial cross-sectional view including the central axial line of propeller shaft 1 and the input shaft 6 of differential 5 (output shaft 3 of the transmission 2). Figure 6B is an oblique view viewed from the oblique direction on the side of differential 5 (transmission 2).

Compared with the vibration transfer rate reducing device shown in Figures 4A and 4B, the cross-sectional shape of cylindrical weight 8j (8i) on the side of the differential 5 (the transmission 2) is increased. As a result, the center of gravity of vibration restraining mass weight 8j (8i) is further moved away from the end surface of the propeller shaft 1. This configuration is better for mass distribution of weight 8j (8i). In other words, with a smaller mass the weight can move the joint of the flexural vibration to the side of the flexible joint 7' (4'). The rest of the configuration is the same as that shown in Figure 4 and will not be explained again.

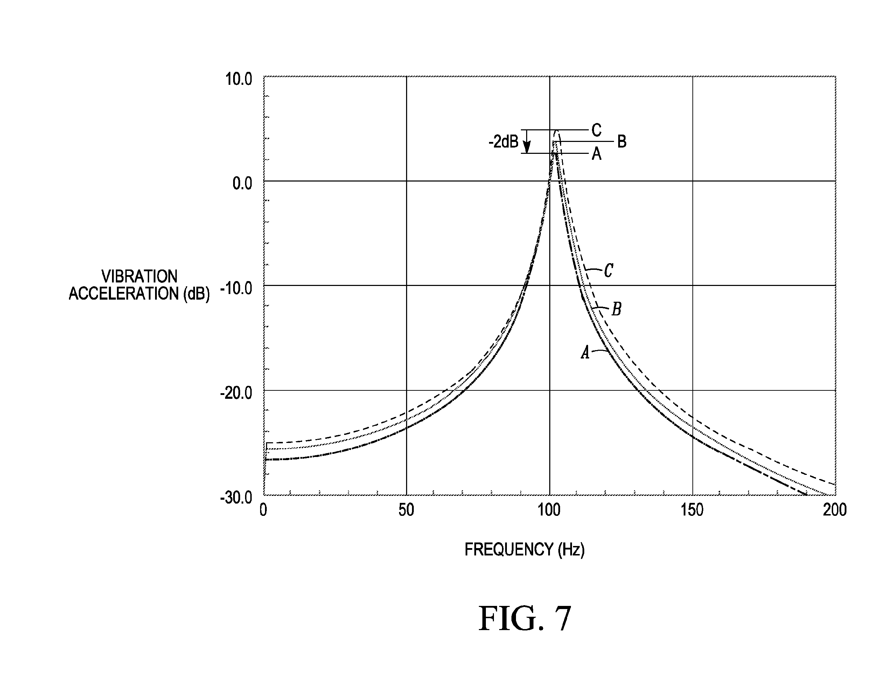

Figure 7 is a graph illustrating the effect of the vibration transfer rate reducing device disclosed and shown in Figure 2. In Figure 7, the abscissa represents the frequency (Hz), while the ordinate represents the vibration acceleration in dB.

In order to evaluate the effect of the transfer vibration rate reducing device disclosed herein, vibration was applied to the central part of propeller shaft 1 in the axial direction, and the vibration acceleration at the tip of differential 5 was measured. In this case, a 1.1 kg weight 8 was used. For the purpose of comparison, evaluation was conducted in the same way for the case when a cubic weight with a mass of 1.1 kg and 51.8 mm on each side was directly added to the tip of the differential 5 and for the case when no weight was applied.

The line indicated by A in Figure 7 shows the evaluation result when the vibration rate reducing device disclosed herein is used. The line indicated by B shows the evaluation result in the case when the vibration restraining mass weight is directly added to the tip of differential 5. The line indicated by C shows the evaluation result when no vibration restraining mass weight is added. In this case, the tip of differential 5 indicates the end part of a differential gear on the side of the constant velocity joint.

As shown in Figure 7, by using the vibration transfer rate reducing device disclosed herein, the vibration acceleration can be reduced by about 2 dB compared with the case when no weight is added at the peak near 105 Hz. The vibration acceleration can be reduced by about 1 dB compared with the case when a vibration restraining mass weight is added directly to the tip of the differential.

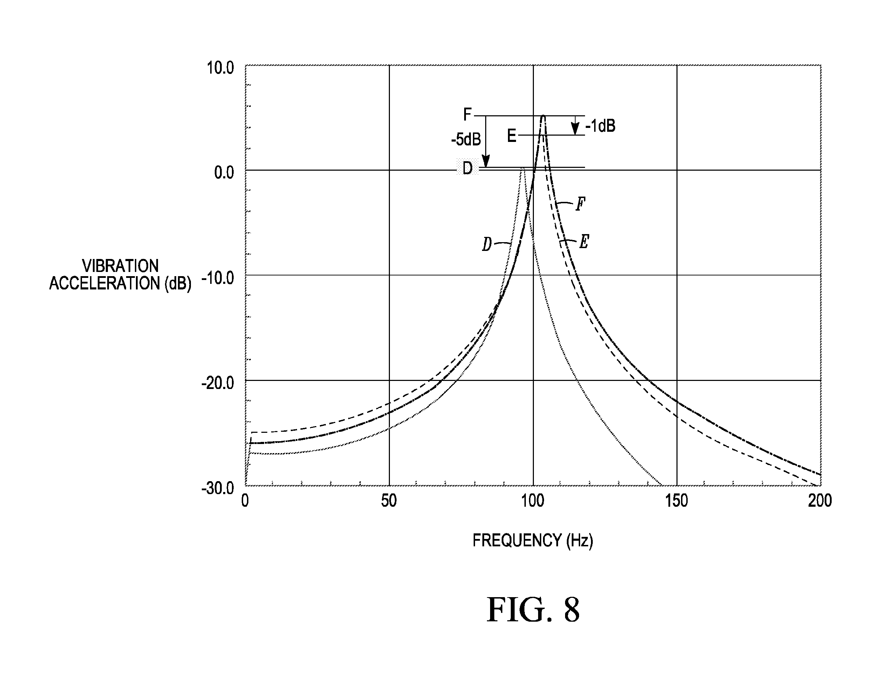

Figure 8 is a diagram illustrating the effect of the vibration transfer rate reducing device disclosed and shown in Figures 6A and 6B. In Figure 8, the abscissa represents the frequency (Hz), while the ordinate represents the vibration acceleration in dB.

In order evaluate the effect of the transfer vibration rate reducing device disclosed in the present invention, vibration was applied to the central part of the propeller shaft 1 in the axial direction, and the vibration acceleration at the tip of the differential 5 was measured. In this case, the weight 8 used was 1.84 kg and had 160 mm as the outer diameter on the side of differential 5 and 130 mm as the outer diameter on the side of the constant velocity joint 7. For the purpose of comparison, the evaluation was conducted in the same way for the case when a cubic weight with a mass of 1.84 kg and 61.6 mm on each side was directly added to the tip of differential 5 and for the case when no vibration restraining mass weight was applied.

The solid line indicated by D in Figure 8 shows the evaluation result when the vibration rate reducing device disclosed herein is used. The line indicated by E shows the evaluation result in the case when the weight is directly added to the tip of differential 5. The line indicated by F shows the evaluation result when no weight is added.

As shown in Figure 8, by using the vibration transfer rate reducing device disclosed herein, the vibration acceleration can be reduced by about 5 dB compared with the case when no weight is added at the peak. The vibration acceleration can be reduced by about 4 dB compared with the case when the weight is directly added to the tip of differential 5.

It will be appreciated from the foregoing that the invention described hereinabove can reduce the vibration transfer rate of the shaft that transfers the rotation driving force of the propeller shaft, etc., thereby improving the noise and vibration performance in the vehicle body. In embodiments of the invention a device or apparatus includes a weight arranged at the end portions of the shaft that transfers driving force. This weight is connected to the end portions of the shaft via a joint and is extended to the side of the rotary member that rotates along with the shaft.

When a weight extended to the side of the rotary member is arranged at the end portion of the shaft, if flexural vibration occurs in the shaft, the nodal of the flexural vibration can be moved from the central part in the axial direction of the shaft to the side of the end portion of the shaft. Consequently, the vibration of the end portion of the shaft can be reduced. The flexural vibration of the shaft transferred to the rotary member via the joint can also be reduced. That is, the vibration transfer rate of the shaft can be reduced. In this way, the noise caused by the flexural vibration of the shaft can be restrained, and the noise and vibration performance of the vehicle can be improved.

Various modifications or changes to the disclosed embodiments can be made. For example, these embodiments explain the noise caused by the flexural vibration of propeller shaft 1. The invention, however, can be used to reduce the vibration transfer rate of drive shaft or other parts that transfer rotation driving force instead of propeller shaft 1. Also, as explained in these embodiments, weight 8 is arranged at the two ends of propeller shaft 1. However, it is also possible to arranged weight 8 only at one end depending on the vibration state.

Hence, while the invention has been described in connection with what is presently considered to be advantageous embodiments, it is to be understood that the invention is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

This application claims priority from Japanese Patent Application Serial No. 2005-332921, filed 17th November 2005, the contents of which are incorporated herein by reference.

## Claims

1. An apparatus for reducing vibration in a shaft comprising:
a rotary member connected to an end portion of the shaft via a joint, the rotating member being rotatable with the shaft; and
a weight arranged at the end portion of the shaft and extending axially in a direction of the rotary member.

2. An apparatus as claimed in claim 1 wherein the weight is generally cylindrical and includes two end surfaces, a first one of the end surfaces of the weight being fixed to an end surface of the end portion.

3. An apparatus as claimed in claim 2 wherein the weight has an outer portion whose outer diameter is larger than that of the first end surface of the weight.

4. An apparatus as claimed in claim 2 or claim 3 wherein outer portion has an outer diameter which is tapered from a side of the shaft toward the other of the end surfaces of the weight.

5. An apparatus as claimed in any preceding claim comprising:
a through-hole located in the joint;
a first bolt for fixing the first one end surface of the weight to the end portion of the shaft through the through-hole, wherein the joint is fixed between the one end surface of the weight and the end portion of the shaft; and
a second bolt fixing the rotary member to the joint.

6. An apparatus as claimed in any preceding claim wherein the rotary member comprises an output shaft of a transmission and/or a differential and wherein the weight is disposed closer to the transmission and/or the differential than to the joint.

7. An apparatus as claimed in any preceding claim wherein the joint comprises an inner ring, an outer ring that encloses the inner ring and a ball between the inner ring and the outer ring and wherein the end portion of the shaft is coupled to the inner ring.

8. An apparatus as claimed in claim 7 comprising a flange connecting the outer ring of the joint to the rotary member, wherein the weight is disposed in an area between the flange and the joint.

9. An apparatus as claimed in claim 8 comprising a grease case in an area between the outer ring and the shaft.

10. An apparatus as claimed in any preceding claim comprising:
a second rotary member connected to an opposed end portion of the shaft via a second joint, the second rotating member being rotatable with the shaft; and
a second weight arranged at the opposed end portion adjacent the second joint and extending axially in a direction of the second rotary member.

11. A method of reducing vibration in a shaft comprising:
connecting a rotary member to an end portion of the shaft using a connecting member, the rotary member being rotatable with the shaft; and
arranging a weight at the end portion of the shaft, the weight extending from the connecting member in a direction of the rotary member.

12. A vehicle having an apparatus or adapted to use a method as claimed in any preceding claim.
